Europäisches Patentamt

European Patent Office

Office européen des brevets

(19)

(11) EP 0 903 717 A2

(12) **EUROPÄISCHE PATENTANMELDUNG**

(43) Veröffentlichungstag:
24.03.1999 Patentblatt 1999/12

(51) Int. Cl.$^6$: **G09G 3/20**, G09G 3/36

(21) Anmeldenummer: 98117107.7

(22) Anmeldetag: 10.09.1998

(84) Benannte Vertragsstaaten:
AT BE CH CY DE DK ES FI FR GB GR IE IT LI LU
MC NL PT SE
Benannte Erstreckungsstaaten:
AL LT LV MK RO SI

(30) Priorität: 13.09.1997 DE 19741132

(71) Anmelder: **Phan, Gia Chuong**
12045 Berlin (DE)

(72) Erfinder: **Phan, Gia Chuong**
12045 Berlin (DE)

(74) Vertreter:
**Scholz, Hartmut, Dipl.-Ing.**
**Patentanwalt**
**Rheinstrasse 64**
**12159 Berlin (DE)**

(54) **Anzeigeeinrichtung und Verfahren zur dynamischen Ansteuerung von Bildelementen**

(57)   Display (10) bestehend aus Pixeln (18) und
Dots (11). Die Pixel (18) sind dynamisch generiert. Die
dynamischen Pixel (18) sind hierbei aus den vorhandenen Dots (11) variable generiert. Die Pixel (18) bilden
durch Zusammenstellung von benachbarten Dots (11,
13, 14, 15) eine dynamisch erzeugte logische Einheit,
wobei sich die benachbarten Pixel (18) physikalisch
überlagern.

Fig. 2

**Beschreibung**

Die Erfindung betrifft ein Display bestehend aus Pixeln und Dots sowie ein Verfahren zur Ansteuerung dieses Displays.

Bei bekannten Displays, wie sie in der Video-, Film- und Computertechnik Anwendung finden, sind sog. Pixel entlang von horizontal und/oder vertikal verlaufenden Zeilen angeordnet. Die Pixel bestehen in der Regel aus so genannten Dots, welche die drei Grundfarben Rot, Grün und Blau darstellen. Dots sind Leuchtquellen, durch deren Lichtmischung leuchtende Mischfarben erzeugt werden - man spricht hier von einer additiven Farbmischung.

Bei Computermonitoren und bei Fernsehern ist das Display in eine Vielzahl von Pixeln unterteilt, die in einem festen Raster angeordnet sind. Die Ansteuerung der Pixel erfolgt einzeln. Dabei werden die Pixel beispielsweise von links nach rechts und von oben nach unten angesteuert, wie es bei einem Kathodenbildschirm üblich ist.

Aus der EP 0 637 009 A2 ist ein Verfahren und eine Methode zur Ansteuerung von aktiven LCD-Displays bekannt, bei der die Dots versetzt angeordnet sind, wodurch sich die Pixel vorzugsweise in einer Delta-From darstellen. Hierbei sind die Dots einer Farbgruppe miteinander über eine Steuerleitung vertikal verbunden. Die horizontale Ansteuerung erfolgt pixelweise, was bedeutet, dass bei RGB-Pixeln drei Dots zeitgleich angesteuert werden. Ferner weist jeder Dot einen Speicher und ein Schaltelement auf, wodurch eine RGB-Datenübertragung mittels Synchronisationsinformationen erfolgen kann, wie es beispielsweise bei herkömmlichen Monitoren der Fall ist.

Aus der DE 36 06 404 A1 sind ein Verfahren zur Erzeugung von Bildelementen auf einem Farbanzeigeschirm sowie eine Farbanzeigevorrichtung bekannt. Hierbei wird ein Lichtgatter verwendet, dessen Gatter mit einer Steuerschaltung einzeln steuerbar sind, so daß durch die Steuerung die Durchlässigkeit des jeweiligen Lichtgatters die gewünschte Farbintensität erzielt wird. Hinter dem Lichtgatter sind Lichtquellen angeordnet, die mindestens zwei Primärfarben zur Verfügung stellen, und die in alternierenden Lichtzyklen mit einer Wiederholfrequenz von mindestens 25 Hz geschaltet werden. Synchron hierzu werden die Lichtgatter gesteuert. Aufgrund der Trägheit des Auges ist es möglich, dass ein Gatter die gewünschte Farbe anzeigt.

Nachteilig bei diesen Displays ist die durch die Rasterung festgelegte Anzahl von Pixeln, die die Auflösung und die Schärfe des Bildes bestimmen. Je feiner die Rasterung ist, desto größer ist die Auflösung. Die Feinheit der Rasterung ist jedoch aufgrund technischer Fertigungsmöglichkeiten begrenzt, denn die verwendeten Kathodenbildschirme weisen so genannte Lochmasken auf, deren Löcher nur unter sehr großem Aufwand weiter verkleinert werden können.

Ebenso ist die Integration einer größeren Anzahl von Transistoren bei einem LCD-Display sehr aufwendig und mit hohen Ausschußzahlen verbunden.

Bei einem LED-Display ist die Anordnung der LEDs ebenfalls sehr aufwendig und kostspielig, da ihr Raumbedarf durch ihre Form vorgegeben ist.

Aufgabe der vorliegenden Erfindung ist es, ein Display der eingangs beschriebenen Art zu schaffen, das bei einer gegebenen Rasterung eine größere optische Auflösung aufweist.

Gelöst wird diese Aufgabe dadurch, daß die Pixel aus den vorhandenen Dots variable generiert sind, die Pixel durch Gruppierung von benachbarten Dots eine dynamisch erzeugte, logische Einheit bilden, so daß sich die benachbarten Pixel physikalisch überlagern. Die dynamischen Pixel werden dabei mit einer so hohen Geschwindigkeit erzeugt, so daß die Erzeugung für das menschliche Auge nicht mehr wahrnehmbar ist.

Ein dynamischer Pixel soll aus mindestens so vielen Dots bestehen, daß darin alle durch die Dots vorgegebenen Grundfarben enthalten sind.

Eine weitere Aufgabe der vorliegenden Erfindung liegt in der Schaffung eines Verfahrens, das eine erhöhte Auflösung für Displays erlaubt, die dotweise angesteuert werden können.

Gelöst wird diese Aufgabe insbesondere dadurch, daß die Pixel dynamisch erzeugt werden, indem durch Gruppierung von benachbarten Dots eine logische Einheit eines Pixels gebildet wird, wobei sich benachbarte Pixel physikalisch überlagern, und die dynamischen Pixel in einer für das menschliche Auge nicht wahrnehmbaren Geschwindigkeit durch sequentielle Ansteuerung erzeugt werden.

Dabei werden die Dots bei der Zusammenstellung zu einem Pixel so ausgewählt, daß sich die benachbarten Pixel nur bereichsweise überlagern. Somit entsteht ein weiterer dynamischer Pixel zwischen den bereits bestehenden normalerweise statischen Pixeln. Die Pixel werden so zusammengestellt, daß sie alle durch die Dots bereitgestellten Grundfarben enthalten.

Weitere vorteilhafte Maßnahmen sind in den Unteransprüchen beschrieben. Die Erfindung ist in der beiliegenden Zeichnung dargestellt und wird nachfolgend näher beschrieben; es zeigt:

**Figur 1a-c** unterschiedliche Anordnungsformen von vier Dots innerhalb eines quadratischen Pixels;

**Figur 2a-b** unterschiedliche Ausführungsformen eines Displays mit quadratischen Pixeln, wobei die bekannten statischen Pixel quadratisch und die erfindungsgemäßen dynamischen Pixel rund dargestellt sind;

**Figur 3a-d** unterschiedliche Ausführungsformen eines Pixels mit den drei Grundfarben-Dots rot, grün und blau;

**Figur 4a-b** unterschiedliche Ausführungsformen eines Displays mit unterschiedlichen Pixelformen, wobei die bekannten statischen Pixel rechteckig und die erfindungsgemäßen dynamischen Pixel oval dargestellt sind;

**Figur 5** ein Display mit einer Steuerung, das über ein Netzwerk mit dem Dot verbunden ist;

**Figur 6** zeigt den Verlauf des interlaced Signals bei der Generierung eines Bildes oder Rahmens aus zwei Feldern;

**Figur 7** zeigt den Verlauf des interlaced Signals bei erfindungsgemäßen dynamischen Pixeln.

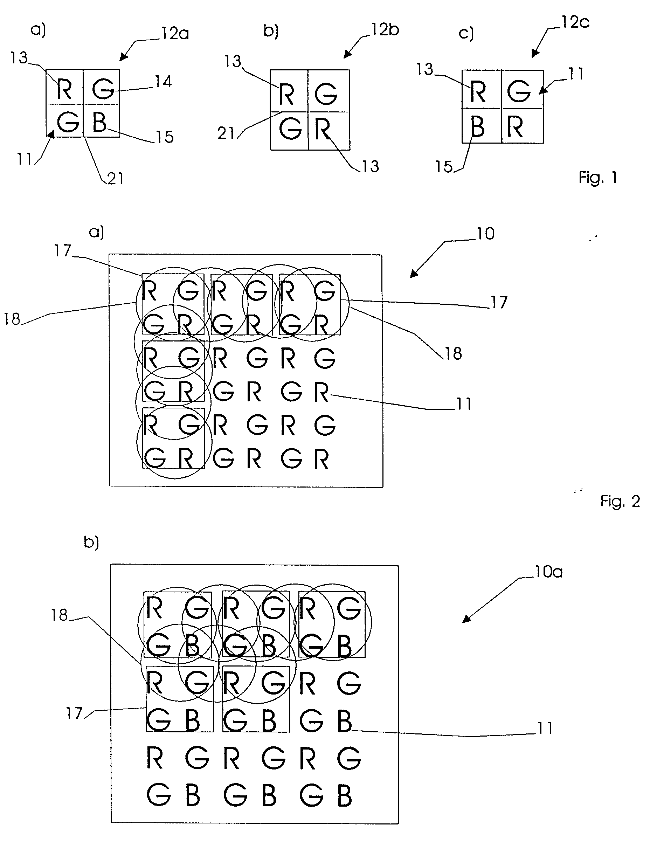

Die in den Figuren 1a bis 1c dargestellten Pixel 12a, 12b und 12c weisen eine quadratische Form auf. Die Pixel 12a, 12b und 12c weisen gleichmäßig angeordnete Dots 11 auf, die die Grundfarben rot - roter Dot 13, grün - grüner Dot 14 und blau - blauer Dot 15 abstrahlen.

Der Pixel in Figur 1b besteht nur aus roten Dots 13 und grünen Dots 14. Jeder Dot 11 ist vorzugsweise durch eine Maske 21 umgeben, damit ein größerer Kontrast zwischen den dynamischen Pixeln 18 erreicht wird. Die genaue Anordnung der farblich unterschiedlichen Dots 13, 14 und 15 spielt hierbei keine Rolle, es sollte jedoch darauf geachtete werden, daß die Anordnung der verschiedenen Dots 13, 14 und 15 in jedem statischen Pixel 17 innerhalb eines Displays 10 identisch ist.

Die Figuren 2a und 2b zeigen Displays 10 und 10a, die quadratische, statische Pixel 17 aufweisen. Die statischen Pixel 17 stellen eine bekannte Rasterung des Displays 10 bzw. 10a dar. Die kreisförmig dargestellten, dynamischen Pixel 18 entsprechen der erfindungsgemäßen Gestaltung des Displays 10 bzw. 10a. Ein dynamischer Pixel 18 beinhaltet - ebenso wie ein statische Pixel 17 - vier Dots 13, 14 und 15, die alle Grundfarben darstellen.

Anders als die statischen Pixel 17 überlappen sich die dynamischen Pixel 18, wobei eine vollständiges Überdecken vermieden werden sollte. Durch ein hochfrequentes Ansteuern der dynamischen Pixel 18 wird das menschliche Auge getäuscht. Das Auge nimmt somit eine exaktere Darstellung des gezeigten Bildes war.

Die Auflösung erhöht sich bei einem Display mit viereckigen Pixel 12a, 12b und 12c um:

$$P = (x - 1) * y + (2x - 1) * (y-1)$$

Pixel, wobei x der Anzahl der Pixel in der Horizontalen und y der Anzahl der Pixel in der Vertikalen entspricht.

Bei den Displays in den Figuren 2a und 2b wäre dieser Wert:

$$p = (3 - 1) * 3 + (2 * 3 - 1) * (3 - 1) = 6 + 10 = 16$$

Das Display hat somit eine Auflösung von 25 = 16 + g statt 9 Punkten.

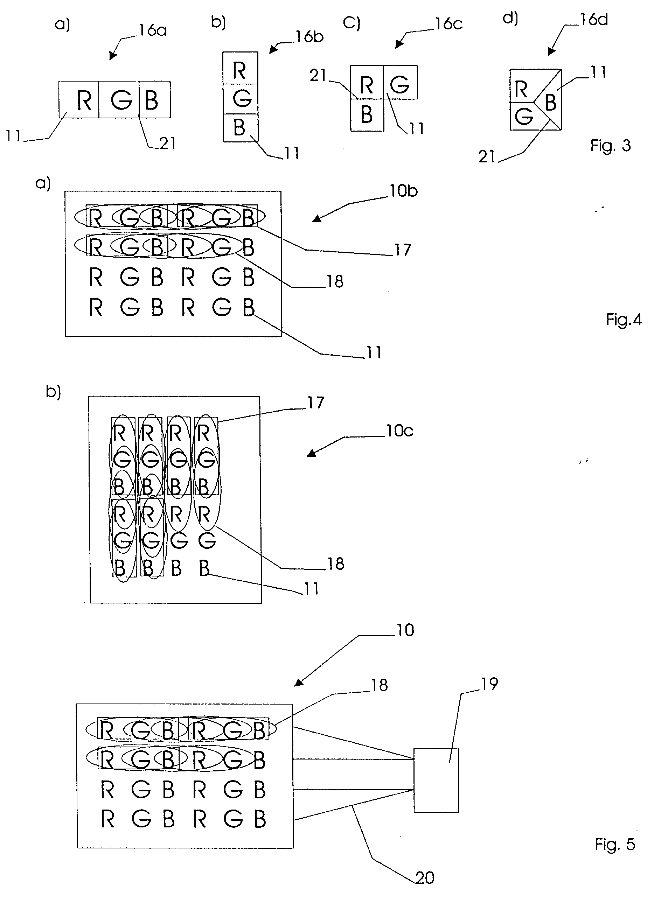

Die Figuren 3a bis 3d zeigen unterschiedliche Formen von Pixeln 16a, 16b, 16c und 16d, die jeweils drei Dots 11 zur Darstellung der drei Grundfarben beinhalten. Die Dots 11 sind durch Masken 21 konturenscharf voneinander getrennt.

Die dynamischen Pixel 18 sollten vorzugsweise jeweils die gleiche Anzahl an Dots 11 enthalten. Die genaue Anordnung der farblich unterschiedlichen Dots 13, 14 und 15 spielt hierbei keine Rolle. Folglich reicht ein Pixel mit beispielsweise nur zwei Grundfarben in Form von Dots, nur für ein nicht vollfarbiges Display, wie es in der Figur 1b dargestellt ist.

Die Figuren 4a und 4b zeigen Displays 10b und 10c, die aus den Pixel 16a und 16b gebildet wurden, wobei die Erhöhung der Auflösung im Vergleich zu der oben beschriebenen quadratischen Form geringer ausfällt.

Figur 5 zeigt ein Display 10, das durch ein Netzwerk 20 mit einer Steuerung 19 verbunden ist. Durch diese Steuerung 19 können bekannte dotweise angesteuerte Displays genutzt werden, um deren Auflösung zu erhöhen. Bei den erfindungsgemäßen Displays weisen alle Dots jeweils einen eigenen - nicht dargestellten - Empfänger auf, der digitale, über das Netzwerk 20 gesendete Informationen in Leuchtintensität für die Dots 11 umwandelt.

Das Netzwerk 20 ist vorzugsweise ein Glasfasernetzwerk. Die Steuerung 19 faßt benachbarte Dots 11 zu einem dynamischen Pixel 18 zusammen, um sie dann als logische Einheit anzusteuern. Diese Ansteuerung erfolgt durch eine hochfrequent Wiederholung, vorzugsweise im Bereich von 100 Hertz.

Die erfindungsgemäßen Displays können ebenfalls für interlaced Signale verwendet werden, durch das das Bild aus einem ungeraden und einem geraden Feld 24 zusammengesetzt wird. Hierbei besteht das ungerade Feld 24 aus Zeilen 22 mit ungeraden Ziffern und das gerade Feld aus Zeilen 23 mit geraden Ziffern.

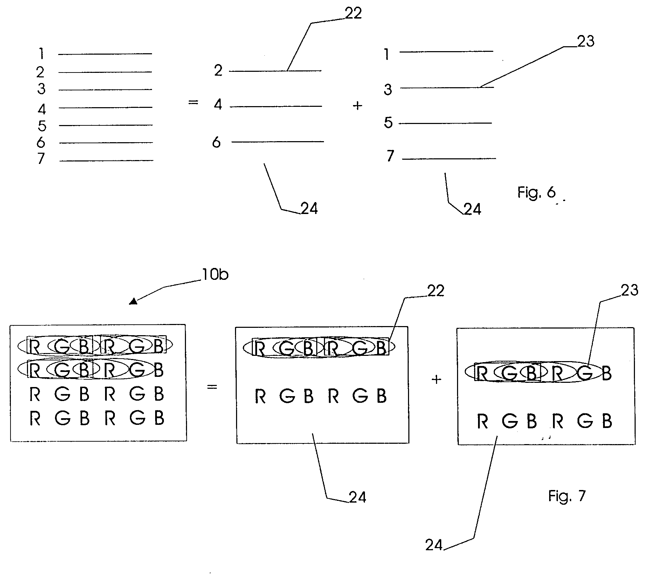

Durch die Trägheit des menschlichen Auges entsteht ein Bild, das aus zwei Feldern 24 zusammengesetzt wird. Die Figur 6 zeigt den theoretischen und die Figur 7 den erfindungsgemäßen Aufbau mit dynamischen Pixeln 18. Andere dynamische Pixelformen sind ebenfalls denkbar.

**Bezugszeichen**

10, 10a, 10b, 10c    Display

| 11 | Dot |
|----|-----|
| 12a, 12b, 12c | Pixel |
| 13 | roter Dot |
| 14 | grüner Dot |
| 15 | blauer Dot |
| 16a, 16b 16c, 16d | Pixel |
| 17 | statischer Pixel |
| 18 | dynamischer Pixel |
| 19 | Steuerung |
| 20 | Netzwerk |
| 21 | Maske |
| 22 | ungerade Zeile |
| 23 | gerade Zeile |
| 24 | Feld |

**Patentansprüche**

1.  Display bestehend aus Pixeln und Dots, dadurch gekennzeichnet, daß die Pixel (18) aus den vorhandenen Dots (11, 13, 14, 15) variable generiert sind, die Pixel (18) durch Gruppierung von benachbarten Dots (11, 13, 14, 15) eine dynamisch erzeugte, logische Einheit bilden und sich die benachbarten Pixel (18) physikalisch überlagern.

2.  Display nach Anspruch 1, dadurch gekennzeichnet, daß die Erzeugung und Ansteuerung der dynamisch sich überlappenden Pixel (18) in einer für das menschliche Auge nicht wahrnehmbaren Geschwindigkeit erfolgt.

3.  Display nach den Ansprüchen 1 bis 2, dadurch gekennzeichnet, daß ein dynamischer Pixel (18) mindestens aus soviel Dots (11, 13, 14, 15) besteht, daß alle durch die Dots (13, 14, 15) vorgegebenen Grundfarben enthalten sind.

4.  Display nach den Ansprüchen 1 bis 3, dadurch gekennzeichnet, daß ein Pixel (18) mindestens zwei unterschiedliche Dots (13) enthält, welche die Grundfarben wiedergeben.

5.  Display nach den Ansprüchen 1 bis 4, dadurch gekennzeichnet, daß ein Pixel (18) mindestens einen roten Dot (13), einen grünen Dot (14) und einen blauen Dot (15) enthält, wobei jeder Dot (11, 13, 14, 15) einzeln ansteuerbar ist.

6.  Display nach den Ansprüchen 1 bis 5, dadurch gekennzeichnet, daß die Dots (11, 13, 14, 15) regelmäßig auf dem Display angeordnet sind, wobei jeder Dot (11, 13, 14, 15) durch eine schwarzen Maske (21) um-geben ist.

7.  Display nach den Ansprüchen 1 bis 6, dadurch gekennzeichnet, daß eine Steuerung (19) durch individuelle sequentielle Ansteuerung der Dots (11, 13, 14, 15) sich zeitlich nacheinander überlappende Pixel (18) erzeugt, wobei jeder Dot (11, 13, 14, 15) durch eine Steuerung (19) entweder analog oder digital ansteuerbar ist und die Dots (11, 13, 14, 15) durch ein Netzwerk (20) mit der Steuerung (19) verbunden sind.

8.  Verfahren zur Ansteuerung eines Displays mit Pixel, die aus Dots bestehen, dadurch gekennzeichnet, daß die Pixel dynamisch erzeugt werden, durch Gruppierung von benachbarten Dots eine logische Einheit eines Pixels gebildet wird, sich benachbarte Pixel physikalisch überlagern, und die dynamischen Pixel in einer für das menschliche Auge nicht wahrnehmbaren Geschwindigkeit durch Ansteuerung erzeugt werden.

9.  Verfahren nach Anspruch 8, dadurch gekennzeichnet, daß die Dots bei der Zusammenstellung zu einem Pixel so ausgewählt werden, daß sich die benachbarten Pixel nur bereichsweise überlagern und ein Pixel so zusammengestellt wird, daß er alle durch die Dots bereitgestellten Grundfarben enthält.

10. Verfahren nach den Ansprüchen 8 und 9, dadurch gekennzeichnet, daß die dynamisch erzeugten Pixel je-weils so erzeugt werden, daß sie die gleiche Anzahl von unterschiedlichen Dots aufweisen, wobei die Pixel mindestens zwei unterschiedliche Dots aufweisen, die jeweils die Grundfarben darstellen.

Fig. 1

Fig. 2

a)

16a

R | G | B

11    21

b)

16b

R
G
B

11

C)

16c

21

R | G
B

11

d)

16d

11

R
G | B

21

Fig. 3

a)

10b

R G B R G B
R G B R G B
R G B R G B
R G B R G B

17

18

11

Fig.4

b)

17

10c

R R R R
G G G G
B B B B
R R R R
G G G G
B B B B

18

11

Fig. 5

10

18

19

R G B R G B
R G B R G B
R G B R G B
R G B R G B

20

Fig. 6

Fig. 7